# EUROPEAN PATENT APPLICATION

(11) **EP 4 797 684 A1**
(43) Date of publication of application: **26.08.2026**
(21) Application number: 25305237.7
(22) Date of filing: 21.02.2025
(51) Int. Cl.: H04N 19/119, H04N 19/147, H04N 19/176, H04N 19/124

(54) **QUANTIZATION PARAMETER SELECTION BASED ON RD COSTS APPROXIMATION FOR ADAPTIVE QUANTIZATION PARAMETER**

(71) Applicant: InterDigital CE Patent Holdings, SAS, 75017 Paris (FR); Centre National de la Recherche Scientifique (CNRS), 75016 Paris (FR); CentraleSupélec, 91190 Gif-sur-Yvette (FR); Institut National Des Sciences Appliquees de Rennes (INSA), 35708 Rennes Cedex (FR); Nantes Université, 44035 Nantes Cedex 1 (FR); Université de Rennes, 35042 Rennes (FR)
(72) Inventor: KHERCHOUCHE, Mohammed El Amine, 35510 CESSON-SEVIGNE (FR); GALPIN, Franck, 35235 THORIGNE-FOUILLARD (FR); DUMAS, Thierry, 35700 RENNES (FR); MENARD, Daniel, 35410 DOMLOUP (FR); ZHANG, Lu, 35235 THORIGNE-FOUILLARD (FR)
(74) Representative: Vossius & Partner Patentanwälte Rechtsanwälte mbB

(57) **Abstract**

Methods and apparatus are provided for adaptive quantization parameter selection based on a cost using a neural network. In one embodiment, the neural network can be trained from a training database comprising numerous coding units or blocks. In another embodiment, a rate distortion cost is determined for combinations of quantization parameter and split configuration. The quantization parameter with a minimal rate distortion cost for a particular split is used for encoding. In another embodiment, rate and distortion are separately approximated, resulting in lowest rate cost and lowest distortion cost for each possible type of split.

## Description

### TECHNICAL FIELD

At least one of the present embodiments generally relates to a method or an apparatus for Quantization Parameter (QP) selection in Quantization Parameter Adaptation (QPA) for hybrid block-based video codecs.

### BACKGROUND

The general aspects described herein relate to approaches for video compression and decompression, and particularly to Quantization Parameter (QP) selection in Quantization Parameter Adaptation (QPA) for hybrid block-based video codecs.

### SUMMARY

At least one of the present embodiments generally relates to a method or an apparatus for compressing or decompressing a set of images or videos using Quantization Parameter (QP) selection in Quantization Parameter Adaptation (QPA) for hybrid block-based video codecs.

According to a first aspect, there is provided a method. The method comprises steps for iteratively determining a cost associated with each split configuration of a set of multiple split configurations for a video block over a range of quantization parameters; determining the split configuration and quantization parameter associated with a lowest cost from said iterative determination; and, encoding the video block using the determined split configuration and quantization parameter.

According to another aspect, there is provided an apparatus. The apparatus comprises a processor and a memory. The processor can be configured to operate on video signals and data according to the aforementioned method.

According to another general aspect of at least one embodiment, there is provided a device comprising an apparatus according to any of the decoding embodiments; and at least one of (i) an antenna configured to receive a signal, the signal including the video signal, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

### BRIEF DESCRIPTION OF THE DRAWINGS

Figure 1 illustrates quantization parameter adaptation.
Figure 2 illustrates an example of Top/Left neighboring blocks of a block.
Figure 3 illustrates a histogram of oriented gradients calculation.
Figure 4 illustrates an invalid rate-distortion cost comparison.
Figure 5 illustrates a neural network for a first variant.
Figure 6 illustrates candidate QP selectin based on minimum predicted RD costs for a block to be split according to a variant embodiment.
Figure 7 illustrates candidate QP selectin based on minimum predicted RD costs for a block to be split according to another embodiment.
Figure 8 illustrates candidate QP selection based on minimum predicted RD costs for a block split according to another embodiment.
Figure 9 illustrates a neural network for a first part of the first variant.
Figure 10 illustrates a neural network for a second part of a first variant.
Figure 11 illustrates an example of QP values considered as inputs.
Figure 12 illustrates a database collection during an encoding process.
Figure 13 illustrates model integration for the inference step.
Figure 14 illustrates detail of the prediction process and formatting the feature vector to feed into the neural network.
Figure 15 illustrates one embodiment of a first method under the described aspects.
Figure 16 illustrates one embodiment of a second method under the described aspects
Figure 17 illustrates one embodiment of an apparatus under the described aspects.
Figure 18 illustrates a standard, generic, video compression scheme.
Figure 19 illustrates a standard, generic, video decompression scheme.
Figure 20 illustrates a processor-based system for encoding/decoding under the general described aspects.

### DETAILED DESCRIPTION

The embodiments described here are in the field of video compression. To achieve high compression efficiency, image and video coding schemes usually employ block-based prediction, including motion vector prediction, and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

In the HEVC (High Efficiency Video Coding) video compression standard, motion compensated temporal prediction is employed to exploit the redundancy that exists between successive pictures of a video.

This invention addresses the Quantization Parameter (QP) selection in Quantization Parameter Adaptation (QPA) for hybrid block-based video codecs such as H.265/HEVC, H.266/VVC, Enhanced Compression Model (ECM) or Essential Video Coding (EVC). QPA is a technique that dynamically adjusts the QP based on the content of the video. This helps optimize visual quality while controlling the bitrate. Instead of using a fixed QP across a video sequence, QPA allows for finer granularity by selecting different QPs for different regions of a frame, or even individual coding unit (CU) of a picture based on their complexity and perceptual importance. To obtain the CUs, for instance, in H.266, there exist 6 partitioning modes : quadtree (QT) split divides the current block into four equal-sized non-overlapping sub-blocks, binary tree split divides the current block into two equal-sized non-overlapping sub-blocks horizontally (BTH) or vertically (BTV), ternary tree split divides the current block into three non-overlapping sub-blocks, one block being twice larger than the other two in horizontal (TTH) or vertical (TTV) direction, "no split" (NS) does not split the current block.

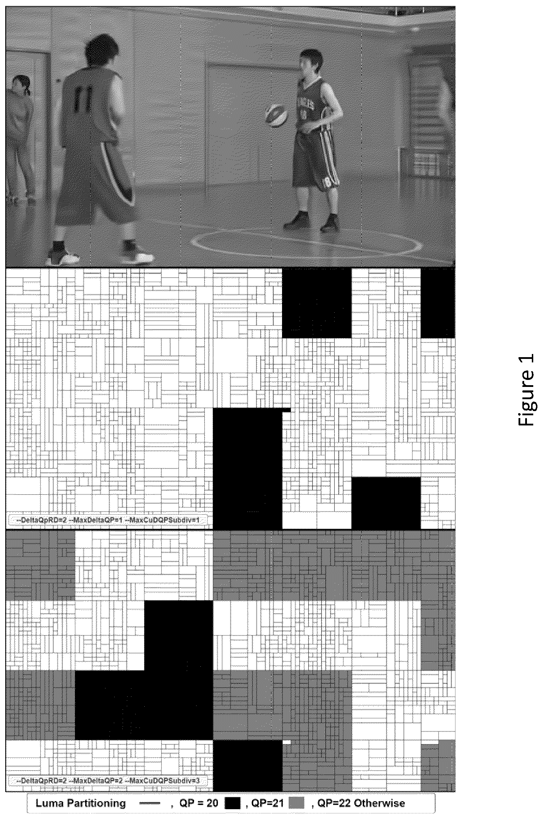

Figure 1 shows an example of QP selection using two configurations, the frame is encoded using VTM-18.0 in All Intra (AI) at QP = 22. In the two cases, the luma channel partitioning is shown in blue, the black regions are encoded with QP = 20, gray regions are encoded with QP = 21, and white regions use QP = 22.

Encoders use Rate-Distortion Optimization (RDO) process to select the best QP and split mode that minimize the Rate-Distortion (RD) cost. With QPA, the RDO is applied at much finer granularity leading to multiple passes of encoding and further increasing encoder complexity. To address this problem, a Neural Network (NN) trained via deep learning algorithm can be integrated into the encoder to accelerate efficiently the QPA process. For instance, in a proposed solution, the NN takes a set of features of the current block and outputs RD costs, one for each possible split of the current block. In the QPA process, the NN loops over the possible QP candidates and selects the QP value associated to the minimum predicted RD cost.

In the present disclosure, quantization parameter adaptation process is investigated in which rate-distortion costs can be predicted via trained neural network. Then, for any coding block, the QP value may be selected based on the minimum predicted rate-distortion cost across all the QP candidates.

### NEURAL NETWORK-BASED PREDICTION OF RATE-DISTORTION COSTS

### Fixed dimension for CU representation

The prediction of RD costs via a NN is block size independent using a fixed dimension vector to represent any CU. The vector v includes four feature sets: neighboring information, parent information, block information, and spatial information extracted from the pixels of the block. The resulting vector is the input to the proposed NN predicting normalized RD costs.

### Neighborhood Information (NI)

During the encoding of a specific Coding Unit (CU), the encoder takes advantage of the neighboring blocks. These neighboring blocks corresponds to CUs that have undergone their encoding.

### Features of the Top and Left neighboring blocks

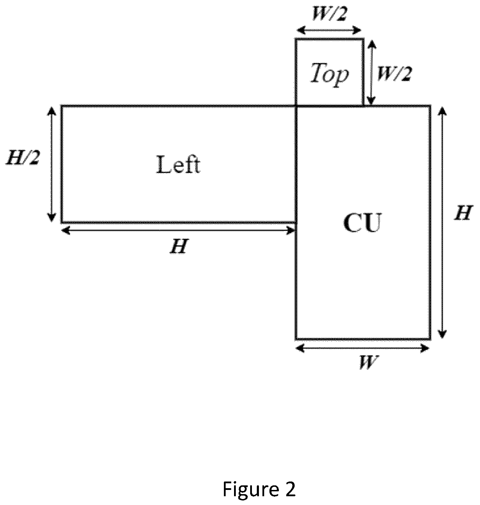

In a first variant, Top and Left neighboring blocks are considered. For instance, Figure 2 depicts an example of Top and Left neighboring blocks of the current W × *H* CU. These neighboring blocks have already undergone their own individual encoding procedures. Thus, for each of the Top and Left neighboring blocks, valuable data such as rate-distortion cost or quadtree depth (number of quadtree splits needed to move from the root block (CTU) to this block in the partitioning tree) are used. For instance, the neighboring features included in the vector v are the rate-distortion cost Cost_{Top} of the Top neighboring block, the rate-distortion cost Cost_{Left} of the Left neighboring block, the quadtree depth QTDepth_{Top} of the Top neighboring block, and the quadtree depth QTDepth_{Left} of the Left neighboring block. In this case, NI = {Cost_{Top}, Cost_{Left}, QTDepth_{Top}, QTDepth_{Left}}.

### Normalization of the rate-distortion costs and quad tree depths

The rate-distortion cost of each neighboring block is normalized per pixel exclusively. For example, following Figure 2, the rate-distortion cost of the Top neighboring block is as follows. ${Cost}_{Top} = \frac{{Cost}_{Top}}{\left(\frac{W}{2}\right) . \left(\frac{H}{2}\right)}$ where Cost_{Top} is the rate-distortion cost of the Top neighboring block of the current CU, W/2 and H/2 are the width and the height respectively of the Top neighboring block.

The quadtree depths of the Top and Left neighboring blocks are normalized per the maximum quadtree depth, denoted maxQTDepth. For instance, following Figure 2, the QTDepth_{Top} of the Top neighboring block is as follows. ${QTDepth}_{Top} = \frac{{QTDepth}_{Top}}{maxQTDepth}$

### Parent Information (PI)

During the RDO on a Coding Unit (CU), the process generates sub-CUs. This implies that each CU owns a parent CU. To capture the partitioning structure, it is important to include the split mode costs of the parent CU as informative data for the child CU. For instance, in H.266, the PI feature sets are the "no split" cost along with its rate and distortion.
*PI =* {*Cost_{NS}, Rate_{NS}, Dist_{NS}*}*.*

### Normalization of RD, R and D of parent information

The parent block has a size of *Wₚ* × *Hₚ*. Then, the RD cost and the distortion of "no split" can be normalized per pixel as follows. ${Cost}_{NS} = \frac{{Cost}_{NS}}{\left({W}_{p}\right) . \left({H}_{p}\right)} , {Dist}_{NS} = \frac{{Dist}_{NS}}{\left({W}_{p}\right) . \left({H}_{p}\right)}$

However, the rate of "no split" is normalized per 2¹⁵ as follows. ${Rate}_{NS} = \frac{{Rate}_{NS}}{{2}^{15}}$

### Block information of the current CU (BI)

The block information includes the block size, QP value, NS cost, NS rate and NS distortion. In this case, BI is.
*BI =* {*W, H, QP, Cost_{NS}, Rate_{NS}, Dist_{NS}*}

For instance, in H.266, the characteristics of BI is
- *W, H* ∈ {32, 16, 8, 4}
- *QP* ∈ [0,51]

This information makes it possible to better generalize the solution and treat more cases while remaining independent of the CU size.

### Block information normalization

For a given block of size *W* × *H*, the height and width are normalized per the maximum size of coding tree unit (CTU). For instance, in H266, this corresponds to maxSize = 128. The QP value is normalized per 64. Cost_{NS}, Rate_{NS}, and Dist_{NS} are normalized the same way as parent information w.r.t the block size.

### Spatial information (SI)

As a first variant, Gray-Level Co-occurrence Matrix (GLCM) and Histogram of Oriented Gradients are used to extract texture, shape descriptor features.

### Gray-Level Co-occurrence Matrix (GLCM) features as part of the spatial information (SI)

A gray scale image *I* refers to either luminance or chrominance component of a CU. The co-occurrence matrix *M* has size (256 × 256), 256 being the maximum dynamic range of the gray scale image. Then, for each pixel in the image, its neighbors are considered based on the defined spatial relationship with distance range ∈ [1,2,3] and $direction ∈ \left[0, \frac{π}{4}, \frac{π}{2}, \frac{3 π}{4}\right]$. Given a gray level pair (*i,j*), the value of *M*(*i,j*) represents the number of times the pair occurs at the defined spatial relationship in the image *I*. $M \left(i, j\right) = \left\{\begin{matrix}1 , if I \left(x, y\right) = i and I \left(x+dx,y+dy\right) = j \\ 0 , otherwise\end{matrix}\right.$ *x,y* are the coordinates of the pixel. *dx* and *dy* define the horizontal and vertical components respectively of the spatial offset between the pixel pairs.

Once the GLCM is calculated, various statistical measures can be deduced to form a vector ***V_{GLCM}*** including contrast, energy, homogeneity, correlation and dissimilarity. The formula for each of the texture features is calculated as follows: $Contrast = {\sum }_{i , j} {\left(i-j\right)}^{2} ⋅ M \left(i, j\right)$ $Energy = {\sum }_{i , j} M {\left(i-j\right)}^{2}$ $Homogenity = {\sum }_{i , j} \frac{1}{1 + \left|i-j\right|} ⋅ M \left(i, j\right)$ $Correlation = \frac{{\sum }_{i , j} M \left(i, j\right) - {μ}_{x} ⋅ {μ}_{y}}{{σ}_{x} ⋅ {σ}_{y}}$ $Dissimilarity = {\sum }_{i , j} \left|i-j\right| ⋅ M \left(i, j\right)$ *i* and *j* are the indices representing the different gray levels in the GLCM. *M*(*i, j*) represents the value at position (*i,j*). *µₓ* and *µ_{y}* are the means of the row and column sums of the GLCM, *σₓ* and *σ_{y}* are their respective standard deviations. Then, ***V_{GLCM}** =* {Contrast, Energy, Homogenity, Correlation, Dissimilarity}.

### Histogram of Oriented Gradients (HOG) as second part of the spatial information (SI)

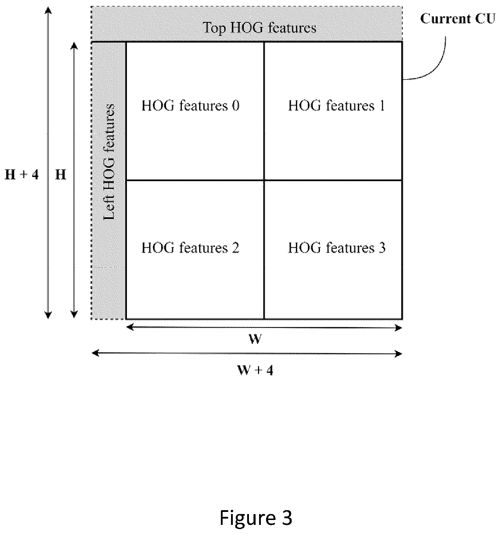

As a second part of the first variant, for each coding unit, HOG descriptors are calculated separately for the Top and Left neighboring causal pixels denoted as Top HOG features and Left HOG features respectively. The CU is divided into four sub-blocks not necessarily of the same size if the shape is rectangular and, for each sub-block, HOG is calculated as shown in Figure 3. This results in four HOG feature vectors of fixed size denoted as HOG features 0, HOG features 1, HOG features 2, HOG features 3. In this case ***V_{HOG}*** = {Top HOG features, Left HOG features, HOG features 0, HOG features 1, HOG features 2, HOG features 3}.

*Gₓ* represents the absolute difference between the neighboring pixels at the right and left of the current pixel. *G_{y}* represents the absolute difference between the neighboring pixels at the top and bottom of the current pixel. ${G}_{x} = \left|I\left(i,j+1\right)-I\left(i,j-1\right)\right|$

### G_{y} = |I(i - 1,j) - I(i + 1,j)| (12)

Where *i,j* are the coordinates of the pixel matrix *I*.

After that, magnitude *µ* and angle *θ* for each pixel can be calculated through *Gₓ, G_{y}* as follows. $Magnitude \left(μ\right) = \sqrt{{G}_{x}^{2} + {G}_{y}^{2}}$ $Angle \left(θ\right) = {tan}^{- 1} \left(\frac{{G}_{y}}{{G}_{x}}\right)$

After calculating magnitude and angle matrices, 9 bins *Hᵢ* histogram with an angle range Δ*θ* of 20° are calculated and each ith bin has boundaries from [*i · Δθ,* (*i* + 1) · *Δθ*] with center value *Cᵢ* = (*i +* 0.5) · Δ*θ*.

For each angle *θ*, the index *i* of the bin is calculated $i = \left⌊\frac{θ}{Δ θ}\right⌋$ then the corresponding magnitude is accumulated into *Hᵢ,* where *Hᵢ = Hᵢ + µ*. Values of the histogram *H* are then normalized by *y:* ${H}_{i} = \frac{{H}_{i}}{γ} , γ = \sqrt{{\sum }_{i} {H}_{i}^{2}}$

Finally, for the second variant the spatial feature vector ***V_{SF}** =* {***V_{GLCM}, V_{HOG}*}***.* In this case ***V_{SF}*** = {Contrast, Energy, Homogenity, Correlation, Dissimilarity, Top HOG features, Left HOG features, HOG features 0, HOG features 1, HOG features 2, HOG features 3}.

### Computing rate-distortion costs in QPA

In the realm of video codecs such as HEVC, VVC, ECM, EVC, one technique has been put forward to enhance the QPA. A prior work addresses the issue of optimizing the RDO when adaptive quantization parameter is enabled in hybrid block-based video codecs. A theoretical method is proposed using multiple Lagrange parameters to handle varying QPs within the same CTU along with an empirical approach that approximates the theoretical solution for practical implementation.

In the RDO process, the RD *cost J_{CU}* of a given Coding Unit (CU) is calculated as follows: ${J}_{CU} = {D}_{CU} + λ \left(QP\right) ⋅ {R}_{CU}$

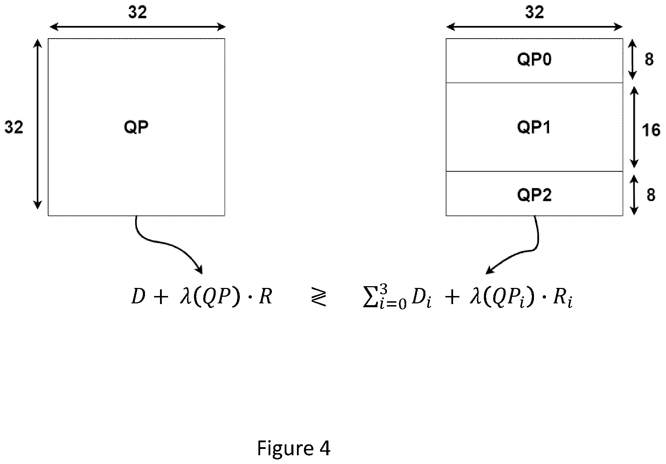

Where *D_{CU}* is the distortion, *R_{CU}* is the number of bits used to encode the CU, and *λ*(*QP*) is the Lagrange parameter deduced from the quantization parameter QP. Figure 4 shows an example of comparison between RD costs of a coding block of size 32 × 32 in the case of NS and in the case where the block is divided into sub-blocks. The RD cost associated to the split mode on the right side of Figure 4 is not correct as it mixes RD costs that are not additive.

The RD cost, as expressed in Equation 16, is impractical to compute directly because it is impossible to isolate the bit cost for each individual QP-unit. This is explained by the fact that a single, extensive prediction, transformation, and entropy coding process may span multiple QP values. The following RD cost formula proposed in a prior work is used. ${J}_{CU} = {\sum }_{i ∈ CU} \left(\frac{{D}_{i}}{λ \left({QP}_{i}\right)}+{R}_{i}\right) = \left({\sum }_{i ∈ CU} \frac{{D}_{i}}{λ \left({QP}_{i}\right)}\right) + {R}_{CU}$

Where *R_{CU}* represents the total bit cost for the entire considered CU.

Instead of using traditional loop over QP candidates to select the best QP, RD cost in Equation 17 is predicted by a trained NN and based on the minimum predicted RD cost, the associated QP value is chosen for the current block.

### Summary of Embodiments

### Neural Network Predictions

The neural network may approximate RD costs for each splitting mode (e.g. NS, QT, BTH, BTV, TTH, TTV when the hybrid block-based video codec of interest is H.266) for each QP candidate to select the minimum RD cost, hence the best QP value. The predicted RD costs may be based on Equation 17.

### RD cost approximation

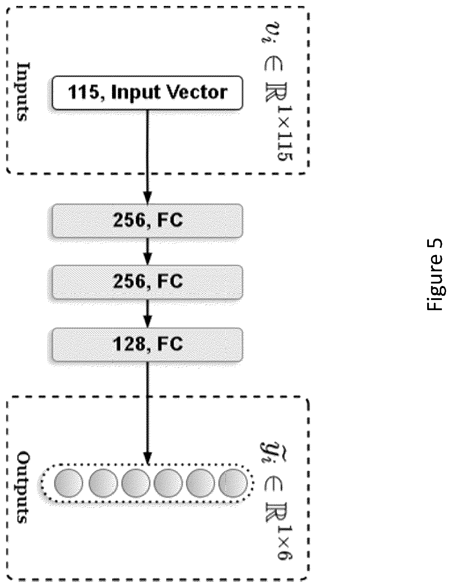

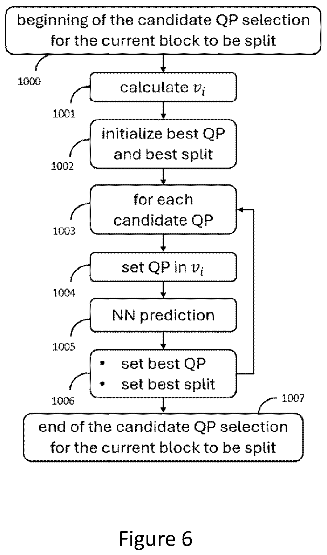

In a first variant embodiment, during the loop over QP candidates, the neural network may predict $n ∈ ℕ *$ RD costs. The RD costs considered in this embodiment may be based on Equation 17. For instance, Figure 5 may depict an exemplar neural network according to this first variant embodiment. This exemplar neural network may take the vector *vᵢ* as input. Then, it returns a vector ${{y}^{˜}}_{i} ϵ {ℝ}^{1 \times n}$ of n RD costs. The QP value may be selected based on the minimum predicted RD cost, hence the splitting mode. For instance, for the current block to be split, Figure 6 may summarize the QP selection process along with splitting mode.

### Any representation of the QP stored in the vector fed into the NN predicting RD costs

In a variant of this first variant embodiment, for the current block to be split, during the QP selection process illustrated in Figure 6, the vector fed into the NN predicting RD costs may contain any representation of the currently tested QP.

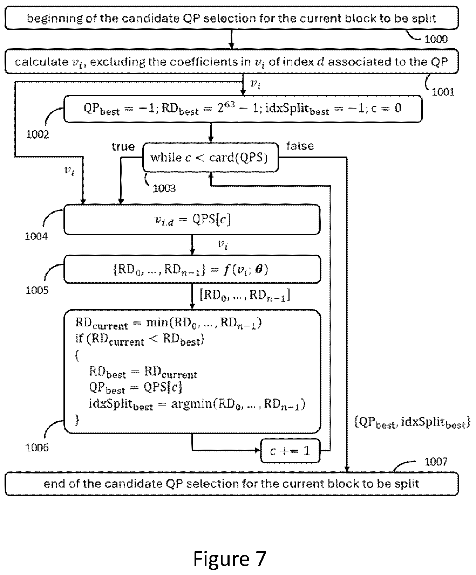

As an example of this variant, for the current block to be split, Figure 7 may present an exemplar application of the QP selection process depicted in Figure 6 in case the coefficient of index $d ∈ ℕ$ in the input vector *vᵢ* may store the QP. For instance, *d* = 0. As another example, *d* = 3. As another example, *d* = 1.

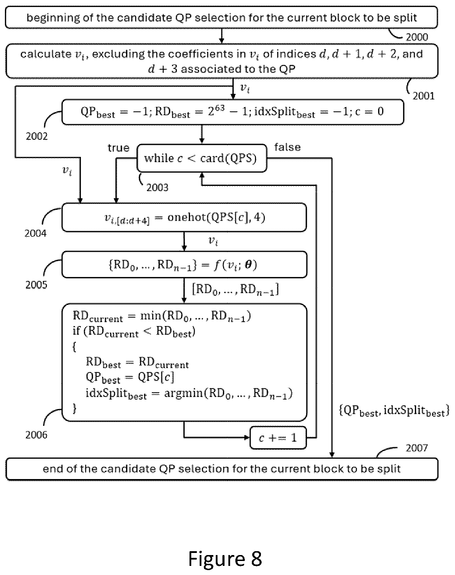

As another example of this variant, for the current block to be split, Figure 8 may show an exemplar application of the QP selection process in Figure 6 in case the coefficients of indices *d, d* + 1*, d* + 2, and *d* + 3 respectively in the input vector *vᵢ* may store the one-hot representation of the QP using 4 levels of quantization.

In Figure 7, at 1000, for the current block to be split, the candidate QP selection may begin.

At 1001, the vector *vᵢ* may be filled, e.g., amongst others, with the HOG features computed on the current block, excluding the coefficients in *vᵢ* of index $d ∈ ℕ$ associated to the QP.

At 1002, the best QP QP_{best}, the best rate-distortion cost RD_{best}, the index of the best split idxSplit_{best}, and the counter c of scanned QP values may be initialized.

At 1003, while c is strictly smaller than the cardinality of the list QPS of candidate QPs, iteratively, the process {1004, 1005, 1006} may be executed and c may be incremented by 1.

At 1004, the coefficient of index *d* in *vᵢ* may be set to the QP of index *c* in QPS.

At 1005, the NN *f*(*.* ; ***θ***), parametrized by ***θ**,* may take *vᵢ* and return the vector [RD₀, ..., RD_{*n*-1}] of n RD costs.

At 1006, if RD_{current} = min(RD₀, ..., RD_{*n*-1}) is strictly smaller than RD_{best}, QP_{best}, RD_{best}, and idxSplit_{best} may be updated.

At 1007, for the current block to be split, the candidate QP selection may end, QP_{best} and idxSplit_{best} being obtained.

In Figure 8, onehot(*Q̅P̅*,4) may denote the function taking the QP value *Q̅P̅* as input and returning the one-hot representation of *Q̅P̅* using 4 levels of quantization. The one-hot representation of *Q̅P̅* using 4 levels of quantization may be a vector of size 4 with three coefficients equal to 0 and one coefficient equal to 1. For instance, onehot(*Q̅P̅*, 4) may return the vector of size 4 filled with 0s, excluding the coefficient of index *l* at 1 where $\left\{\begin{matrix}l = 0 & if & \overline{QP} ∈ \left[0, 24\right[ \\ l = 1 & if & \overline{QP} ∈ \left[24, 29\right[ \\ l = 2 & if & \overline{QP} ∈ \left[29, 34\right[ \\ l = 3 & if & \overline{QP} \geq 34\end{matrix}\right.$

For instance, in Figure 8, 8 levels of quantization may be used instead of 4 levels of quantization. Then, at 2001, *vᵢ* may be filled, excluding the coefficients in *vᵢ* of indices *d, d* + 1, *d* + 2, *d +* 3*, d +* 4*, d +* 5*, d +* 6*,* and *d* + 7 associated to the QP. Then, at 2004, *v*_{*i,* [*d*:*d*+8]} = onehot(QPS[c], 8). onehot(*Q̅P̅*, 8) may denote the function taking the QP value *Q̅P̅* as input and returning the one-hot representation of *Q̅P̅* using 8 levels of quantization. The one-hot representation of *Q̅P̅* using 8 levels of quantization may be a vector of size 8 with seven coefficients equal to 0 and one coefficient equal to 1. For instance, onehot(*Q̅P̅*, 8) may return the vector of size 8 filled with 0s, excluding the coefficient of index *l* at 1 where $\left\{\begin{matrix}l = 0 & if & \overline{QP} ∈ \left[0, 24\right[ \\ l = 1 & if & \overline{QP} ∈ \left[24, 26\right[ \\ l = 2 & if & \overline{QP} ∈ \left[26, 29\right[ \\ l = 3 & if & \overline{QP} ∈ \left[29, 31\right[ \\ l = 4 & if & \overline{QP} ∈ \left[31, 34\right[ \\ l = 5 & if & \overline{QP} ∈ \left[34, 36\right[ \\ l = 6 & if & \overline{QP} ∈ \left[36, 39\right[ \\ l = 7 & if & \overline{QP} \geq 39\end{matrix}\right.$

As another example of this variant, for the current block to be split, the input vector *vᵢ* may store any embedded representation of the QP.

### Any normalization of the predicted RD costs

In a variant of this first variant embodiment, the RD costs predicted by a NN may be normalized in any manner.

For instance, the RD costs predicted by a NN may not be normalized.

As another example, the RD costs predicted by a NN may be normalized per the median of all RD costs belonging to a training set.

As another example, the RD costs predicted by a NN may be normalized per the mean of all RD costs belonging to a training set.

### Neural network of any architecture

In a variant of this first variant embodiment, the neural network predicting RD costs may feature any architecture.

For instance, this neural network may be fully-connected.
- As an example, it may be composed of $m ∈ ℕ *$ fully connected layers of *n*₀, *n*₁, *n*₂, ..., *n*_{*m*-1} neurons respectively, and an output layer, also fully-connected, returning a vector of *n* RD costs. For instance, *m* = 3, *n*₀ = 256,*n*₁ = 256, *n*₂ = 128. As another example, *m* = 4, *n*₀ = 128,*n*₁ = 512, *n*₂ = 256, *n*₃ = 768. As another example, *m* = 2, *n*₀ = 1024,*n*₁ = 384.
- As an example, it may be composed of $m ∈ ℕ *$ fully connected layers of *n*₀, *n*₁, *n*₂, ..., *n*_{*m-*1} neurons respectively, a skip connection connecting the input to the p^{th} fully-connected layer and the input to the q^{th} one, and an output layer, also fully-connected, returning a vector of n RD costs. For instance, *m* = 4, *n*₀ = 128, *n*₁ = 512, *n*₂ = 256, *n*₃ = 768, the skip connection connecting the input to the 1^{st} fully-connected layer and the input to the 3^{rd} one. As another example, *m* = 3, *n*₀ = 384,*n*₁ = 256, *n*₂ = 64, *n*₃ = 96, the skip connection connecting the input to the 1^{st} fully-connected layer and the input to the output layer.

For instance, a fully-connected layer may refer to a layer encompassing a multiplication between its input vector and a weight matrix, then the vector resulting from this vector-matrix multiplication may be added with a vector of biases, then the vector resulting from the addition with biases may be fed into a non-linear function. For instance, this non-linear function may be ReLU. As another example, this non-linear function may be LeakyReLU. As another example, this non-linear function may be PReLU. As another example, a fully-connected layer may refer to a layer encompassing a multiplication between its input vector and a weight matrix, then the vector resulting from the vector-matrix multiplication may be fed into a non-linear function. As another example, a fully-connected layer may refer to a multiplication between its input vector and a weight matrix.

For instance, this neural network may be fully-connected and contain attention module(s).
- As an example, it may be composed of $m ∈ ℕ *$ fully connected layers of *n*₀, *n*₁, *n*₂, ... , *n*_{*m*-1} neurons respectively, an attention module of $k ∈ ℕ *$ neurons, and an output layer, also fully-connected, returning a vector of n RD costs. For instance, *m* = 3, *n*₀ = 992, *n*₁ = 192, *n*₂ = 64, the attention module may be the scaled dot-product attention with *k* = 256 coefficients at the output of its last vector-matrix multiplication. As another example, *m* = 1, *n*₀ = 256, the attention module may be the scaled dot-product attention with *k* = 768 coefficients at the output of its last vector-matrix multiplication.
- As another example, the neural network may be made of alternance of groups, each group involving a fully-connected layer and an attention module, and an output layer, also fully-connected, returning a vector of *n* RD costs. For instance, each group may be composed of a fully-connected layer with 256 neurons and a scaled dot-product attention with *k* = 256 coefficients at the output of its last vector-matrix multiplication.

For instance, this neural network may contain convolutional layers, fully-connected layers, and optionally attention module(s).

### Prediction of RD costs adaptable to any types of partitioning splits

In a variant of this first variant embodiment, the prediction of RD costs via a NN may be adapted to any types of partitioning splits.

For instance, *n* = 6, e.g. corresponding to the splits NS, QT, BTH, BTV, TTH, TTV when the hybrid block-based video codec of interest is H.266.

As another example, *n* = 4, e.g. corresponding to the splits NS, QT, BTH, and BTV when the hybrid block-based video codec of interest is H.266.

As another example, *n* = 10, e.g. corresponding to the splits NS, QT, BTH, BTV, TTH, TTV, "GBS vertical 1/4", "GBS vertical 3/4", "GBS horizontal 1/4", and "GBS horizontal 3/4". In this last example, "GBS vertical 1/4" may refer to the Generalized Binary splitting vertical with ratio *α =* 1/4. "GBS vertical 3/4" may refer to the Generalized Binary splitting vertical with ratio *α* = 3/4. "GBS horizontal 1/4" may refer to the Generalized Binary splitting horizontal with ratio *α* = 1/4. "GBS horizontal 3/4" may refer to the Generalized Binary splitting horizontal with ratio *α* = 3/4. As another example, *n* = 14, e.g. corresponding to the splits NS, QT, BTH, BTV, TTH, TTV, "GBS vertical 1/4", "GBS vertical 3/4", "GBS horizontal 1/4", "GBS horizontal 3/4", "GBS vertical 3/8", "GBS vertical 5/8", "GBS horizontal 3/8", and "GBS horizontal 5/8". In this last example, "GBS vertical 3/8" may refer to the Generalized Binary splitting vertical with ratio *α* = 3/8. "GBS vertical 5/8" may refer to the Generalized Binary splitting vertical with ratio *α* = 5/8. "GBS horizontal 3/8" may refer to the Generalized Binary splitting horizontal with ratio *α* = 3/8. "GBS horizontal 5/8" may refer to the Generalized Binary splitting horizontal with ratio *α* = 5/8.

As another example, *n* = 14, e.g. corresponding to the splits NS, QT, BTH, BTV, TTH, TTV, "GBS vertical 1/4", "GBS vertical 3/4", "GBS horizontal 1/4", "GBS horizontal 3/4", UQT-H1, UQT-H2, UQT-V1, and UQT-V2. In this last example, UQT-H1 may refer to the Unsymmetric Quad-Tree split Horizontally of type 1, i.e. the split of the current *W* × *H* block horizontally into 4 sub-blocks of sizes *W* × (*H*/8)*, W* × (*H*/2), *W* × (*H*/4)*,* and *W* × (*H*/8) respectively. UQT-H2 may refer to the Unsymmetric Quad-Tree split Horizontally of type 2, i.e. the split of the current *W* × *H* block horizontally into 4 sub-blocks of sizes *W* × (*H*/8)*, W* × (*H*/4)*, W* × (*H*/*2*), and *W* × (*H*/8) respectively. UQT-V1 may denote the Unsymmetric Quad-Tree split Vertically of type 1, i.e. the split of the current *W* × *H* block vertically into 4 sub-blocks of sizes (*W*/*8*) × *H,* (*W*/2) × *H,* (*W*/4*)* × *H,* and (*W*/8) × *H* respectively. UQT-V2 may denote the Unsymmetric Quad-Tree split Vertically of type 2, i.e. the split of the current *W* × *H* block vertically into 4 sub-blocks of sizes (*W*/*8*) × *H,* (*W*/4) × *H,* (*W*/2) × *H,* and *(W*/*8)* × *H* respectively.

### Rate and distortion separately approximated

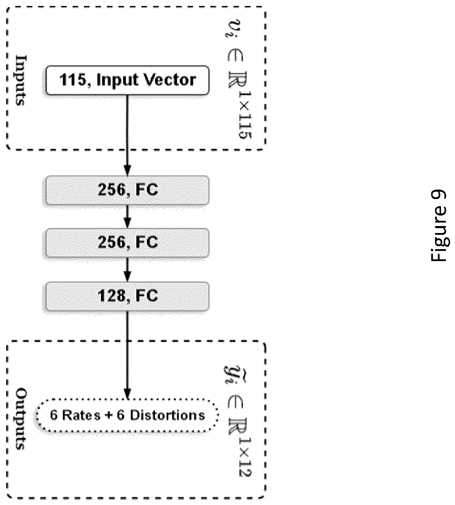

In a variant of this first variant embodiment, rate and distortion may be predicted separately of each split. This may allow for a better control and the values may be added with other sub-CUs predictions to get the total RD cost of the parent CU. Figure 9 may show the updated final output layer. Instead of predicting directly six RD costs, twelve outputs may be considered, meaning that ${{y}^{˜}}_{i} ϵ {ℝ}^{1 \times 12}$ (i.e. six rates + six distortions).

### Rate, distortion and lambda separately approximated

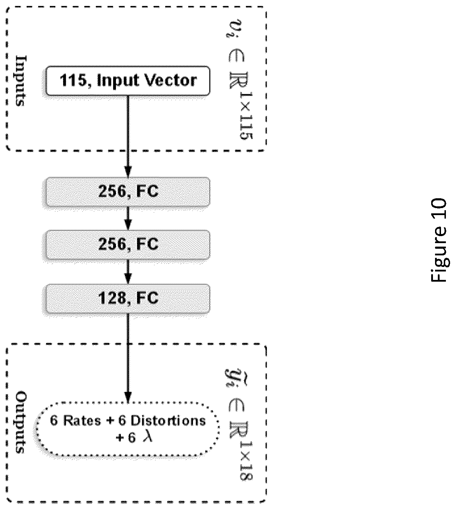

In a variant of this first variant embodiment, rate, distortion and lambda may be separated in the prediction and the output vector may be a vector ${{y}^{˜}}_{i} ϵ {ℝ}^{1 \times 18}$ (i.e. six rates + six distortions + six lambda values), as shown in Figure 10. This may help reduce the number of predictions. Instead of predicting for each coding block, only lower CUs may be predicted. Then, the minimum RD costs may be aggregated to deduce the parent costs.

### Multiple QPs as input feature

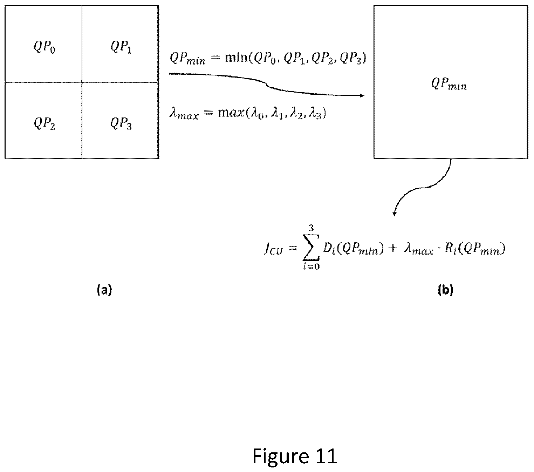

As a second variant embodiment, various QP values may be considered in the input feature vector *vᵢ*. The QP values may be the map selected for the current split mode as depicted in Figure 11a where the current block may be divided using QT mode and the final QP map may be used to predict the RD cost associated to each split mode. Since several CU sizes may be treated in this disclosure, a fixed dimension in the input vector may be maintained.

### Fixed QP values per regions for RD costs approximation

In a variant of the second variant embodiment, the feature vector *v* may consider QP values as input features. Following Equation (17), in the case of splitting a coding block, the sub-CUs may use different QP values as shown in Figure 11a. The best RD cost may be obtained based on the *QPₘᵢₙ* and *λₘₐₓ* of the resulting sub-blocks as depicted in Figure 11b. Hence, for each RD cost, the *QPₘᵢₙ* may be considered in the input feature vector *v* normalized by 64.

### Fixed QP values per regions for rate, distortion and lambda approximation

In a variant of the second variant embodiment, following Equation (18), the rate, distortion, and *λ* may be predicted separately. In this case, *R_{CU}*(*QPₘᵢₙ*)*, D_{CU}*(*QPₘᵢₙ*) and *λₘₐₓ* may be predicted by the NN. ${J}_{CU} = {\sum }_{i = 0}^{3} {D}_{i} \left({QP}_{min}\right) + {λ}_{max} ⋅ {R}_{i} \left({QP}_{min}\right)$

The predicted values are additive, and the total RD cost may be deducted using the original Equation (1).

### Training process of the framework

### Collection of training database

Numerous CUs may be collected to form a training database during an encoding process of many sequences of different resolution including 4K, FHD, HD and SD and using QPA and four QP values: 22, 27, 32, 37 at both intra and inter mode predictions. Heuristics may be deactivated for all CUs to test each possible split mode and have a large dataset.

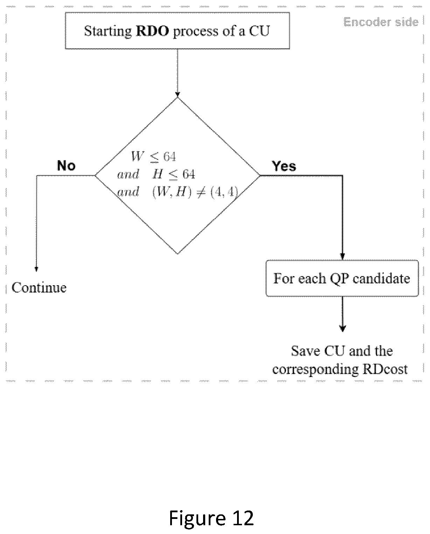

Figure 12 may depict the collection of the database. When starting the encoding of a CU, *NF, BI, PI* and *SI* features may also be extracted to form the total vector ***v*** that represents the current state where ***v** =* {*NF, PI, BI, SI*}.

### Training phase

The collected dataset may be divided into two sets: training and validation sets. The function *f*(*.*;*θ*), parametrized by *θ*, may define the neural network. The training set may be used to optimize the NN parameters using Adam optimizer. A loss function 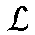 may be used to update the NN parameters and may be defined as follows: $L = \frac{1}{N} {\sum }_{i = 0}^{N - 1} {\left({{y}^{˜}}_{i}-{y}_{i}\right)}^{2} + λ ⋅ {\sum }_{k = 1}^{K} {W}_{k}^{2}$

Where *ỹᵢ* and *yᵢ* may be the predicted and the ground truth RD costs of the *i*-th sample respectively, N may be the total number of samples. Plus, a regularization term corresponding to the L2 norm of the weights *W* of the *NN, W* c *θ*. *λ* may be the regularization factor. For instance, *yᵢ* may not be normalized. In other training example, *yᵢ* may be normalized by the median of all costs in the training set. As another example, *yᵢ* may be normalized by the mean of all existing costs in the train dataset.

The NN may be trained and validated over several epochs. The resulting NN may be tested and integrated at the encoder side of a hybrid block-based video codec to select the QP candidate and the associated split mode.

### Application to H.266

### Flag characteristic of the Neural Network partitioning mode prediction for inference step

*"ActivatePrediction* " may be a Sequence Parameter Set (SPS) flag. "ActivatePrediction" at 1 may indicate that the model predicts RD costs for the current coding unit (CU) within the Rate-Distortion Optimization (RDO) loop and can select the QP candidate and the partitioning mode. In case where the classical heuristics are activated, the encoder may prepare a list of split modes to be tested based on the heuristics and *"currTestMode"* may refer to the current split mode being tested on top of the current CU. "split modes" may determine how the CU is further partitioned into smaller sub-blocks. If the model is activated *(ActivatePrediction = 1)* and the prediction (output of the model) matches the *"currTestMode",* then the encoder may test the specific split mode on the CU. This means that predictions of the NN may align with the current testing configuration. On the other hand, if the prediction does not match the *"currTestMode",* the mode may be skipped, and the encoder may move on to the next configuration. This skipping mechanism may help accelerate the partitioning process by avoiding unnecessary evaluations of split modes that are deemed less promising according to the NN predictions.

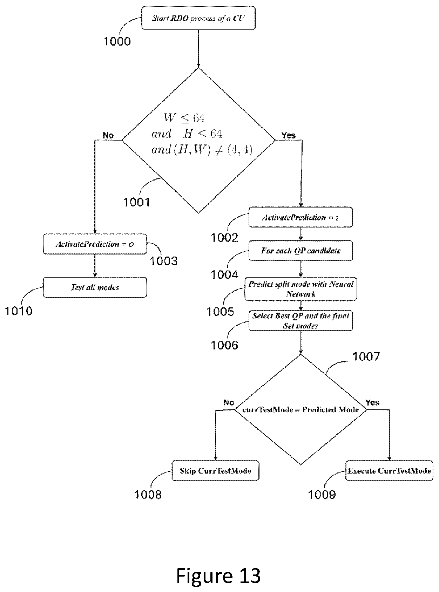

Figure 13 may summarize the integration of the NN and the inference process.

At 1000, the rate-distortion optimization process may start to encode each coding unit.

At 1001, the CU size is checked to determine whether it falls within the range of CUs that may be predicted.

At 1002, the flag "ActivatePrediction" may be used to control the model prediction, if the condition at 1001 is verified the flag may be set to 1.

At 1003, if the condition is not verified, the flag may be set to zero and the RDO at 1010 may test only the list of partitions selected by default heuristics if activated or test all partitions otherwise. At 1004, the RDO may loop over the selected QP candidates based on QPA parameters.

At 1005, for each QP candidate, the NN may predict RD costs associated to the CU being encoded.

At 1006, the best QP candidate may be selected along with the split mode based on the minimum predicted RD cost by the NN. See Figures 7, 8. n Partitioning modes may be selected from the vector that contains the minimum RD cost associated to the best QP candidate.

At 1007, if the *"currTestMode"* aligns with the selected modes, the split mode may be executed in the RDO at 1009. However, if the union of *"currTestMode"* and the selected modes is Ø (empty set) then the mode may be skipped at 1008.

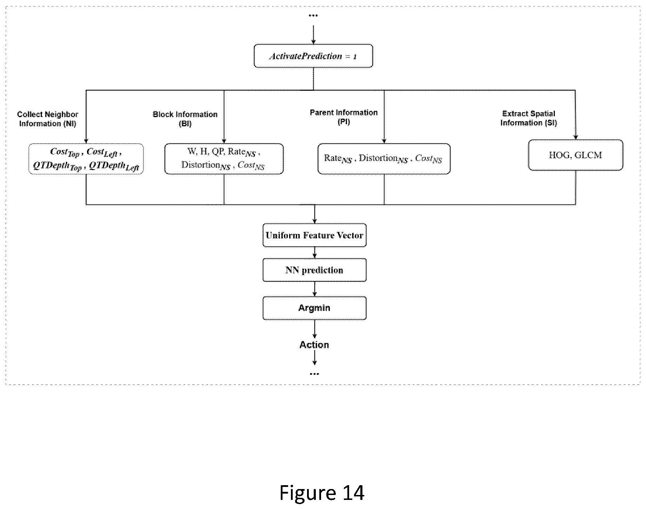

(PP) step is detailed in Figure 14 in which all feature sets may be collected to form the input feature vector and pass it as input to the trained NN to predict the RD costs and selects the argument of the minimum predicted vector which represents the split mode of the current CU.

If the encoder heuristics are deactivated, then the RDO process may test all the split modes for each coding unit. In this case, the NN may skip unnecessary modes and accelerate the partitioning process.

The NN may predict n RD costs. Then, the index of the minimum value may be selected which corresponds to the split mode. In this case, instead of testing one split mode, a threshold T may be used to select N minimum RD costs, hence selecting their index and test N splitting modes where *N* ≤ *n.* For instance, *n* = 6. As another example, *n* = 10. By varying the threshold, a trade-off between accelerating the RDO process and BD-rate loss may be found.

In summary, the integration of a model during the inference step of a video coding encoder, by utilizing the *"ActivatePrediction"* flag, may allow for more efficient and informed decision-making regarding the partitioning of coding units, leading to improved coding performance and computational speed.

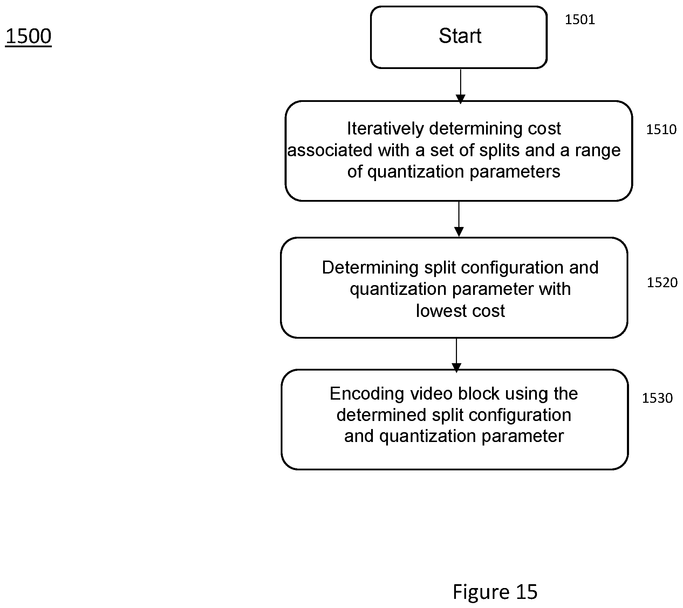

One embodiment of a method 1500 under the general aspects described here is shown in Figure 15. The method commences at start block 1501 and control proceeds to block 1510 for iteratively determining a cost associated with each split configuration of a set of multiple split configurations for a video block over a range of quantization parameters. Control proceeds from block 1510 to block 1520 for determining the split configuration and quantization parameter associated with a lowest cost from said iterative determination. Control proceeds from block 1520 to block 1530 for encoding the video block using the determined split configuration and quantization parameter.

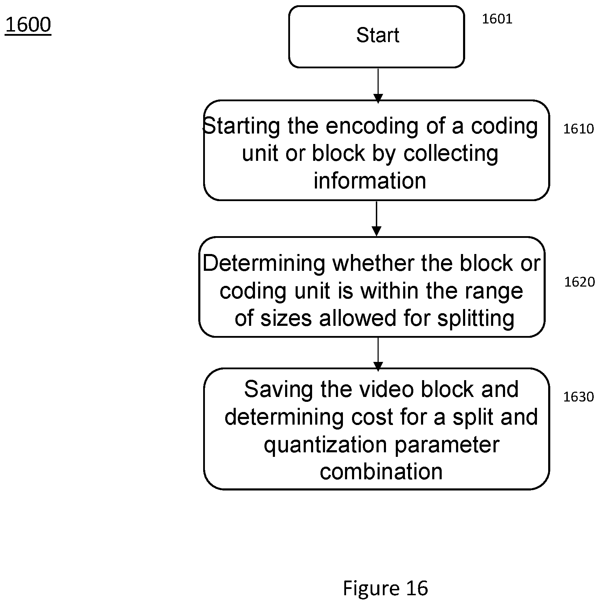

One embodiment of a method 1600 under the general aspects described here is shown in Figure 16. The method commences at start block 1601 and control proceeds to block 1610 for starting the encoding of a coding unit or block by collecting information, for example, neighborhood information, parent information, block information, and spatial information. Control proceeds from block 1610 to block 1620 for determining whether the block or coding unit is within the range of sizes allowed for splitting. If within the range of sizes, control proceeds from block 1620 to block 1630 for saving the block or coding unit and determining cost for a split and quantization parameter combination.

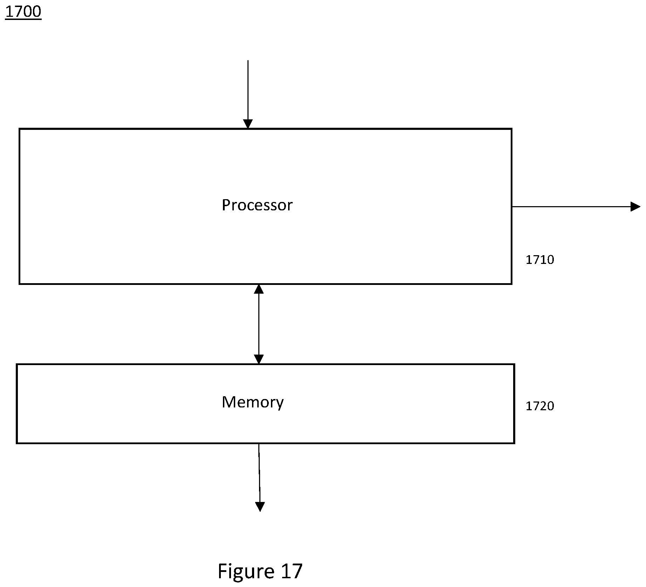

Figure 17 shows one embodiment of an apparatus 1700 for encoding, decoding, compressing or decompressing, or filtering of video data using the aforementioned methods. The apparatus comprises Processor 1710 and can be interconnected to a memory 1720 through at least one port. Both Processor 1710 and memory 1720 can also have one or more additional interconnections to external connections.

Processor 1710 is also configured to either insert or receive information in a bitstream and, either compressing, encoding, decoding, or quantizing using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description and does not limit the application or scope of those aspects. Indeed, all of the different aspects can be combined and interchanged to provide further aspects. Moreover, the aspects can be combined and interchanged with aspects described in earlier filings as well.

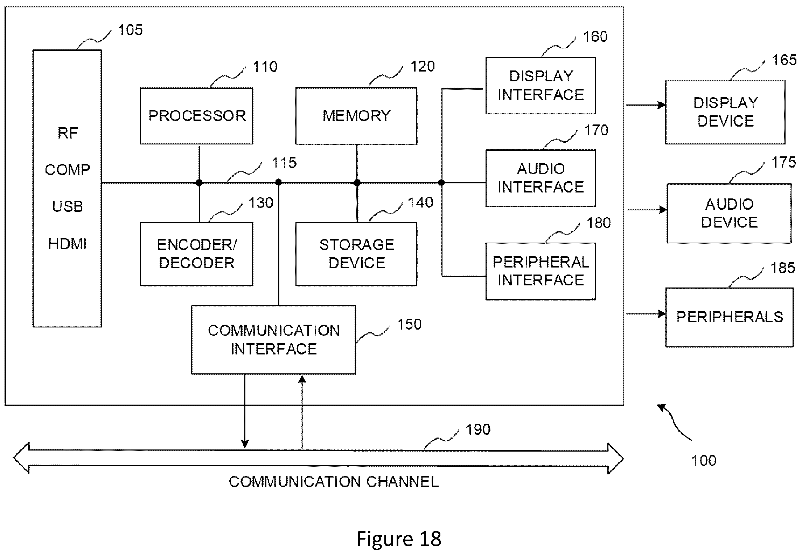

The aspects described and contemplated in this application can be implemented in many different forms. Figures 18, 19, and 20 provide some embodiments, but other embodiments are contemplated and the discussion of Figures 18, 19, and 20 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

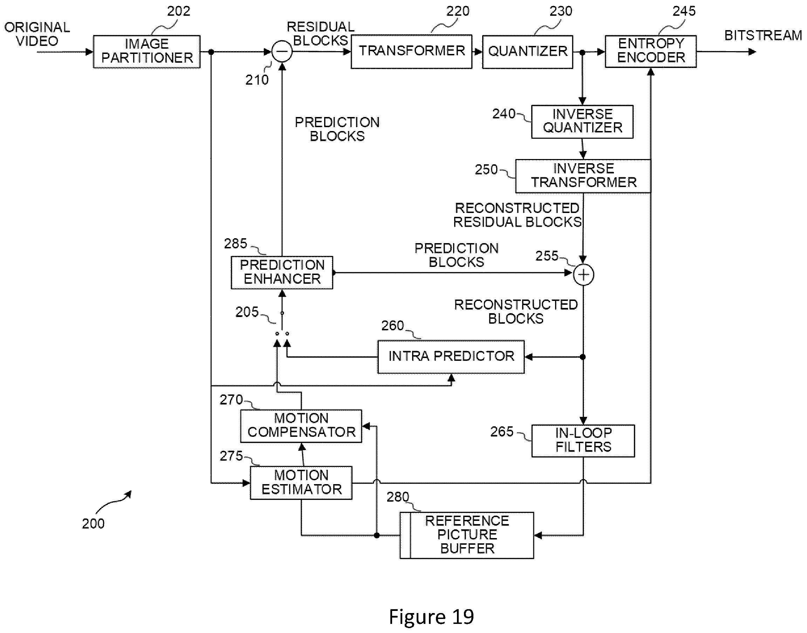

Various methods and other aspects described in this application can be used to modify modules, for example, the intra prediction, entropy coding, and/or decoding modules (160, 260, 145, 230), of a video encoder 100 and decoder 200 as shown in Figure 18 and Figure 19. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application. The specific values are for example purposes and the aspects described are not limited to these specific values.

Figure 18 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 19 illustrates a block diagram of a video decoder 200. In the decoder 200, a bitstream is decoded by the decoder elements as described below. Video decoder 200 generally performs a decoding pass reciprocal to the encoding pass as described in Figure 18. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

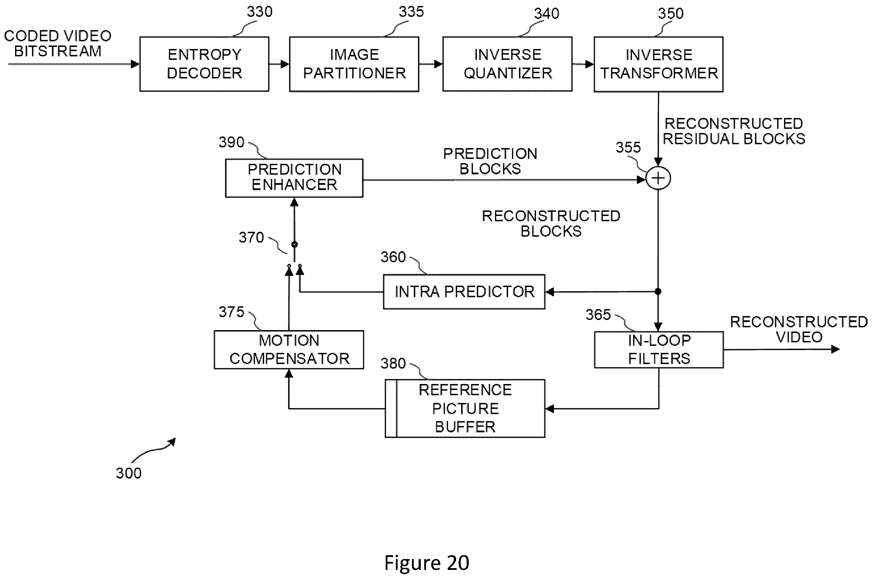

Figure 20 illustrates a block diagram of an example of a system in which various aspects and embodiments are implemented. System 1000 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in Figure 20, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or another device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:
At least one embodiment comprises predicting a cost analysis using a neural network of video blocks with differing split configurations and quantization parameters, and subsequently encoding the video blocks.

At least one embodiment comprises training the neural network, as for example from a training database comprising numerous video blocks or coding units.

At least one embodiment comprises the above embodiment and further comprising encoding or decoding the video block using the determined prediction.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

## Claims

1. A method, implemented in a neural network, the method comprising:
iteratively determining a cost associated with each split configuration of a set of multiple split configurations for a video block over a range of quantization parameters;
determining the split configuration and a quantization parameter associated with a lowest cost from said iterative determination; and,
encoding the video block using the determined split configuration and quantization parameter.

2. An apparatus, comprising:
a neural network, configured for:
iteratively determining a cost associated with each split configuration of a set of multiple split configurations for a video block over a range of quantization parameters;
determining the split configuration and a quantization parameter associated with a lowest cost from said iterative determination; and,
encoding the video block using the determined split configuration and quantization parameter.

3. The method of Claim 1, or the apparatus of Claim 2, wherein the cost is a rate-distortion cost.

4. The method, or the apparatus, of Claim 3, wherein a rate cost and a distortion cost are separately determined.

5. The method of any one of Claims 1, 3 or 4, or the apparatus of any one of Claims 2 through 4, wherein a quantization parameter is determined for each sub-block.

6. The method of any one of Claims 1, 3, 4 or 5, or the apparatus of any one of Claims 2 through 5, wherein the neural network is trained via a deep learning algorithm.

7. The method of any one of Claims 1, 3, 4, 5 or 6, or the apparatus of any one of Claims 2 through 6, wherein a vector used as input to the neural network comprises at least one of neighboring information, parent information, block information, and spatial information.

8. The method, or the apparatus of Claim 7, wherein the vector further comprises multiple quantization parameters.

9. The method of any one of Claims 1, or 3 through 8, or the apparatus of any one of Claims 2 through 8, wherein sub-blocks use different QP values for cost determination.

10. The method of any one of Claims 1, or 3 through 9, or the apparatus of any one of Claims 2 through 9, wherein multiple blocks are used for a training database.

11. A device comprising:
an apparatus according to Claim 2; and
at least one of (i) an antenna configured to receive a signal, the signal including a video signal, (ii) a band limiter configured to limit the received signal to a band of frequencies that includes the video block, and (iii) a display configured to display an output representative of the video block.

12. A non-transitory computer readable medium containing data content generated according to the method of any one of claims 1, or 3 through 10, or by the apparatus of any one of claims 2, or 2 through 3, for playback using a processor.

13. A signal comprising video data generated according to the method of any one of claims 1, or 3 through 10, or by the apparatus of any one of claims 2, or 3 through 10, for playback using a processor.

14. A non-transitory computer program product comprising instructions which, when the program is executed by a computer, cause the computer to carry out the method of any one of claims 1 or 3 through 10.
